# EUROPEAN PATENT SPECIFICATION

(11) **EP 3 670 412 B1**
(45) Date of publication and mention of the grant of the patent: **21.08.2024**
(21) Application number: 19216261.8
(22) Date of filing: 13.12.2019
(51) Int. Cl.: B66B 1/30, B66B 1/24

(54) **ENERGY-AWARE DISPATCHING FOR CONVEYANCE SYSTEMS**
ENERGIEBEWUSSTE ABFERTIGUNG FÜR FÖRDERSYSTEME
RÉPARTITION SENSIBLE À L'ÉNERGIE POUR SYSTÈMES DE TRANSPORT

(30) Priority: 14.12.2018 US 201862779500 P
(43) Date of publication of application: 24.06.2020
(73) Proprietor: Otis Elevator Company, Farmington, Connecticut 06032 (US)
(72) Inventor: MANES, Enrico, East Hartford, CT Connecticut 06108 (US); DWARI, Suman, East Hartford, CT Connecticut 06108 (US); SAVULAK, Stephen, East Hartford, CT Connecticut 06108 (US); THEBEAU, Ronnie E., Farmington, CT Connecticut 06032 (US)
(74) Representative: Dehns

(56) References cited:
- EP-A1- 1 864 932
- WO-A1-2010/020705
- US-A1- 2009 218 175

## Description

### BACKGROUND

The embodiments herein relate to the field of conveyance systems, and specifically to a method and apparatus for energy-aware dispatching for conveyance systems.

Conveyance systems, such as, for example, elevator systems, escalator systems, and moving walkways require electric power for operation. Travelling cables typically connect an elevator car of the elevator system to a stationary power source to provide power to the elevator car. US 2009/0218175 A1 discloses a power system which comprises a controller which manages power on a power bus by controlling operation of a convertor and inverters to drive a motoring hoist motor with power delivered to the power bus by the converter and generating hoist motors. WO 2010/020705 A1 discloses an elevator system and a method for controlling an elevator group. EP 1 864 932 A1 discloses a system according to the preamble of claim 1 and a method according to the preamble of claim 10.

### BRIEF SUMMARY

According to a first aspect of the present invention, a system according to claim 1 is provided.

In some embodiments, modification of the dispatch schedule adjusts one or more of a charging time of the energy storage device, an arrival time of the conveyance apparatus, and a departure time of the conveyance apparatus.

In some embodiments, modification of the dispatch schedule is based on at least one of a state of charge of the energy storage device, a state of health of the energy storage device, a temperature of the energy storage device, a current dispatching plan of the conveyance apparatus, a location of the conveyance apparatus, and a location of a recharging interface.

In some embodiments, the charging schedule is adjusted to change a charging duty cycle of the energy storage device with respect to one or more other energy storage devices.

In some embodiments, the charging schedule and the dispatch schedule are adjusted with respect to one or more expected usage patterns of a plurality of conveyance apparatuses including the one or more other energy storage devices.

In some embodiments, the power management system is configured to wirelessly transmit electrical power to the energy storage device at one or more locations.

The conveyance system is an elevator system, and the conveyance apparatus is an elevator car.

In some embodiments, the energy storage device is a battery system.

In some embodiments, the energy storage device includes one or more of fuel cells, flow batteries, capacitors, and/or potential energy storage devices.

In some embodiments, the electrical power is provided to one or more of lights, heating, air conditioning, displays, panels, door motors, communication systems, sensor systems, and/or safety systems of the conveyance apparatus.

According to a second aspect of the present invention, a method according to claim 10 is provided.

Technical effects of embodiments of the present invention include controlling conveyance system dispatching based on one or more conditions of at least one energy storage device of the conveyance system.

The foregoing features and elements may be combined in various combinations within the scope of the appended claims. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present invention is illustrated by way of example and not limited in the accompanying figures in which like reference numerals indicate similar elements.
FIG. 1 is a schematic illustration of an elevator system that may employ various embodiments of the present invention;
FIG. 2 is a schematic illustration of a power transfer system for the elevator system of FIG. 1, in accordance with an embodiment of the invention;
FIG. 3 is an enlarged view of communication within the power transfer system of FIG. 2, in accordance with an embodiment of the invention;
FIG. 4 is a schematic illustration of a power transfer system for multiple instances of the elevator system of FIG. 1, in accordance with an embodiment of the invention; and
FIG. 5 is a flow chart of a method in accordance with the invention.

### DETAILED DESCRIPTION

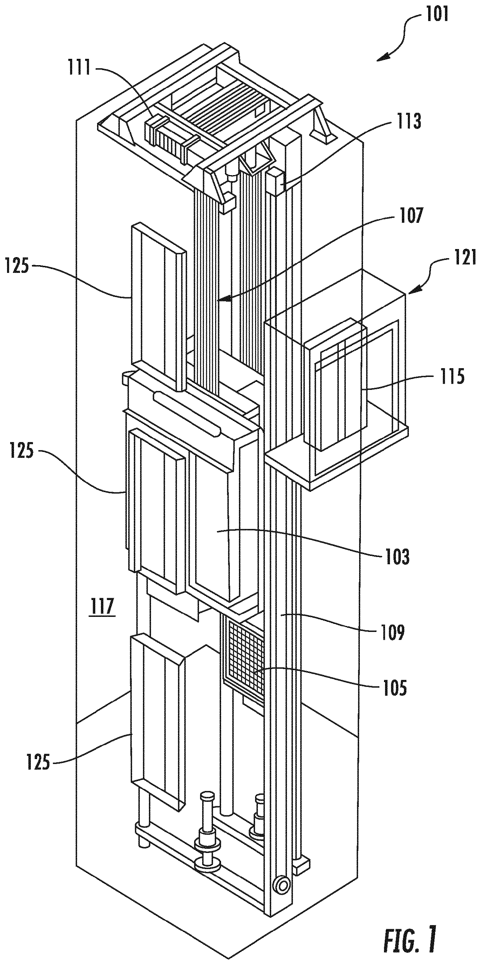

FIG. 1 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the invention, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present invention. For example, embodiments may be employed in ropeless elevator systems using a linear motor to impart motion to an elevator car. Embodiments may also be employed in ropeless elevator systems using a hydraulic lift to impart motion to an elevator car. FIG. 1 is merely a non-limiting example presented for illustrative and explanatory purposes. Further, embodiments can include more than one car in the same hoistway and/or where cars can move between hoistways.

According to the invention, the conveyance system is an elevator system 101 and the conveyance apparatus is an elevator car 103.

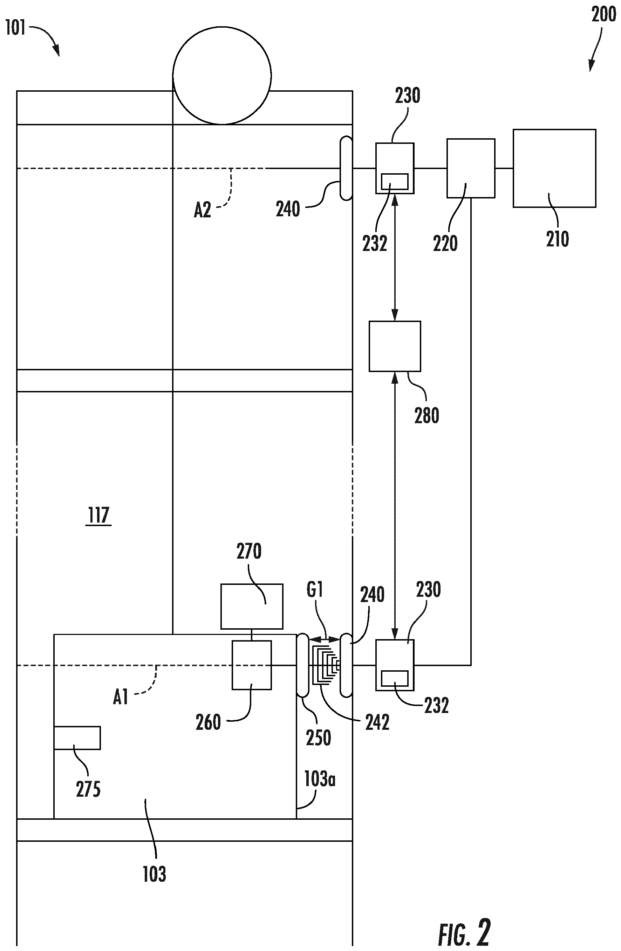

Referring now to FIGS. 2-3 with continued reference to FIG. 1, a view of a system 200 for use with the elevator system 101 of FIG. 1 is illustrated, in accordance with an embodiment of the present invention as an example of a wireless power transfer system. It should be appreciated that, although particular systems are separately defined in the schematic block diagrams, each or any of the systems may be otherwise combined or separated via hardware and/or software. The system 200 may include a power source 210, a power converter 220, a power management system 230, an electrical power transmitter 240, an electrical power receiver 250, an energy storage device management system 260, an energy storage device 270, and a dispatching system 280.

The power source 210 may be a stationary power source, such as an electrical grid, wind, solar, generator power, and/or other such source known in the art. The power source 210 may provide electrical power that can be further conditioned by power converter 220 for the power management system 230 and/or other electric loads.

The power management system 230 is electrically connected to the power converter 220 and may be hardwired. The power management system 230 operates as a power controller to supply the power needs of the elevator car 103 proximate one or more locations, such as a first location A1 and a second location A2. The power management system 230 can control switching, directing, or redirecting power to the elevator car 103 through one or more electrical power transmitters 240 as needed to satisfy the power requirements of the elevator car 103. Electrical power may be transmitted wirelessly or using one or more physical connections. Switching, directing, and redirecting may readily be accomplished employing a bus control switching device 232 of the power management system 230. The bus control switching device 232 may include, but not be limited to, electromechanical and solidstate semiconductor switching devices including relays, contactors, solid state contactors as well as semiconductor switching devices such as transistors, FETs, MOSFETS, IGBTs, thyristors, SCRs, and the like. In addition, to facilitate and implement the functionality of the power management system 230, the voltages and frequencies of the power supplied by the power source 210 may be adjusted by the bus control switching device 232. For example, the bus control switching device 232 may modify a frequency or duty cycle of the power provided from the power converter 220 to satisfy the needs of the elevator car 103.

The system 200 may include one or more electrical power transmitters 240, as shown in FIG. 2. The electrical power transmitters 240 are electrically connected to the power management system 230. The electrical connection between the electrical power transmitter 240 and the power management system 230 may be hardwired. The electrical power transmitter 240 may be located at different locations along the elevator shaft 117. In the example shown in FIG. 2, electrical power transmitters 240 can be positioned at separate locations, such as at a first location A1 in the elevator shaft 117 and a second location A2 of the elevator shaft 117. The electrical power transmitter 240 may be attached to or embedded in a component of the elevator shaft 117. As an example, the electrical power transmitter 240 may include a selected number of electrical coils configured to generate an electromagnetic field 242 when electrical power is run through the electrical coils. The electrical coils of the electrical power transmitter 240 are not shown in FIG. 2 for simplification of the illustration. Alternatively, the electrical power transmitter 240 can use one or more physical contactors to make an electrical connection with the electrical power receiver 250. Further, other known power transmission techniques between the electrical power transmitter 240 and the electrical power receiver 250 may be used.

The system 200 may include one or more electrical power receivers 250, as shown in FIG. 2. The electrical power receivers 250 may be located at different locations of the elevator car 103, such as at a surface 103a or recessed into surface 103a. For example, the electrical power receivers 250 may be attached to the elevator car 103 or embedded in the elevator car 103. When the elevator car 103 and the electrical power receivers 250 are located at the first location A1, the electrical power receivers 250 and the electrical power transmitter 240 at the first location A1 are substantially proximate and a gap G1 can be formed therebetween. Alternatively, the electrical power transmitter 240 and at least one of the electrical power receivers 250 may make physical contact at location A1 such that the gap G1 is absent. Likewise, when the elevator car 103 and the electrical power receivers 250 are located at the second location A2, the electrical power receivers 250 and the electrical power transmitter 240 at the second location A2 can be substantially proximate and gap G1 can be formed therebetween. Further, the electrical power transmitter 240 and at least one of the electrical power receivers 250 may make physical contact at location A2 such that the gap G1 is absent.

The electrical power receivers 250 may include a selected number of electrical coils configured to generate an electric power in response to the electromagnetic field 242 when the electrical power receiver 250 is within the transmission range of the electromagnetic field 242 generated by the electrical power transmitter 240. The electrical coils of the electrical power receiver 250 are not shown in FIG. 2 for simplification of the illustration. Electrical power transmission can include any variation known in the art of contact-based or contactless power transmission, including physical contact, magnetic coupling, optical power transfer, and/or other wireless power transfer techniques.

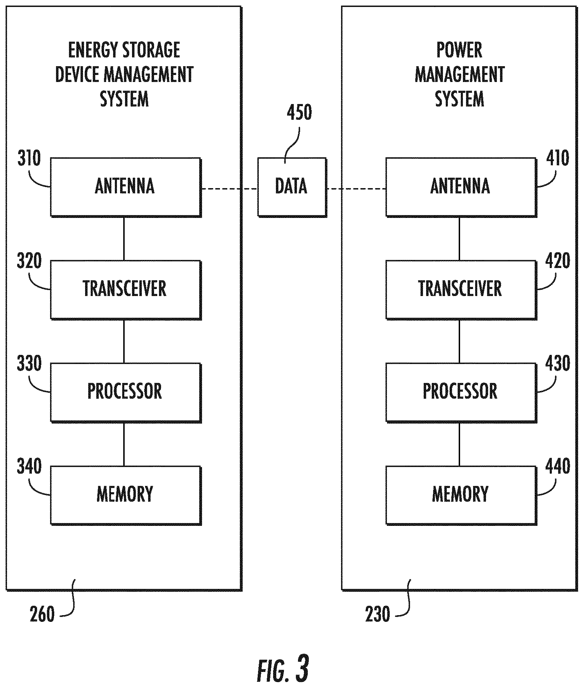

The electrical power receivers 250 can be electrically connected to the energy storage device management system 260. The electrical connection between the electrical power receiver 250 and the energy storage device management system 260 may be hardwired. The energy storage device management system 260 is configured to condition the electrical power received from the electrical power receivers 250 and transfer the electrical power to the energy storage device 270 as needed. The energy storage device management system 260 can also monitor data 450 (see FIG. 3) of the energy storage device 270 and the elevator car 103 which may include at least one of the state of charge of the energy storage device 270, a state of health of the energy storage device 270, a temperature of the energy storage device 270, a dispatching of the elevator car 103, a location of the elevator car 103, and a location of a recharging interface such as one or more electrical power transmitters 240. Examples of the energy storage device 270 may include a battery system (e.g., a battery or bank of batteries), fuel cells, flow battery, capacitors (e.g., super/ultracapacitors), and other devices capable of storing and outputting electric energy. In one embodiment, the energy storage device 270 may store potential energy rather than electrical energy and that potential energy may be utilized to create electrical energy for the elevator car 103. The energy storage device 270 may include a battery system, which may employ multiple batteries organized into battery banks. The energy storage device 270 is electrically connected to the elevator car 103. The electrical connection between the energy storage device 270 and the elevator car 103 may be hardwired. The energy storage device 270 can provide electrical power to one or more electrical loads 275 of the elevator car 103, such as lights, heating, air conditioning, displays, panels, door motors, communication systems, sensor systems, and/or safety systems.

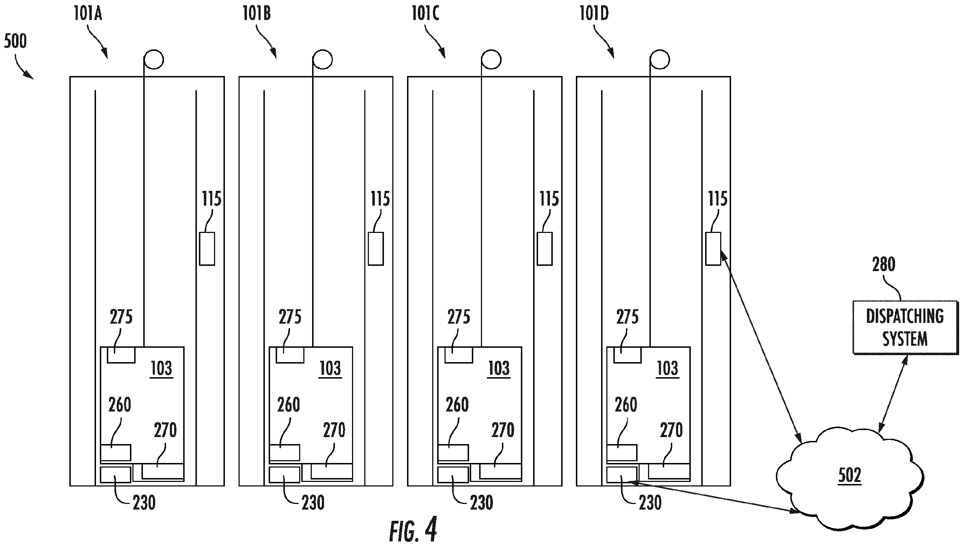

The dispatching system 280 can interface with power management system 230 to control dispatching of the elevator car 103 with respect to a charging schedule to recharge the energy storage device 270 based at least in part on a status of the elevator system 101. The dispatching system 280 may also use power management system 230 to exchange data with energy storage device management system 260, such as status information and a current dispatching plan of the elevator car 103. The dispatching system 280 may modify the dispatch schedule of the elevator car 103 based at least in part on the charging schedule, for instance, to ensure sufficient time is provided for charging of the energy storage device 270 at one or more of the locations A1, A2. Further, in determining when to dispatch the elevator car 103 to a particular landing 125 (FIG. 1), the dispatching system 280 can determine an amount of electrical energy likely needed for the one or more electrical loads 275 and an associated amount of time to determine if/when the elevator car 103 can be sent in view of a charge state or health status of the energy storage device 270. Health status can include monitoring a recharging and discharging capability of the energy storage device 270 for rates, charge levels, and/or other parameters. Further, interactions between the dispatching system 280 and power management system 230 can include requesting an adjustment to change a charge schedule of the energy storage device 270. For instance, where the elevator car 103 is expected to remain at one or more of the locations A1, A2 of the electrical power transmitters 240, a duty cycle at the electrical power transmitters 240 can be adjusted to use a lower power setting for charging the energy storage device 270 over a longer period of time. Where the elevator car 103 is planned to remain at one or more of the locations A1, A2 of the electrical power transmitters 240 for a shorter period of time, the duty cycle at the electrical power transmitters 240 can be adjusted to use a higher power setting for charging the energy storage device 270 over a shorter period of time. Further, the charging schedule and the dispatch schedule can be adjusted relative to other instances of the elevator system 101, as further described in reference to FIG. 4.

Referring now to FIG. 3, with continued reference to FIGS. 1-2, a block diagram illustrates communication between the power management system 230 and energy storage device management system 260. It should be appreciated that, although particular systems are separately defined in the schematic block diagrams, each or any of the systems may be otherwise combined or separated via hardware and/or software.

The power management system 230 can include, for example, an antenna 410, a transceiver 420, a processor 430, and a memory 440. The transceiver 420 is capable of transmitting and receiving data to and/or from the energy storage device management system 260 (e.g., including one-way and/or two-way communication). The transceiver 420 may, for instance, be a near field communication (NFC), Bluetooth, infrared, ZigBee, ZWave, laser, infrared, or Wi-Fi transceiver, or another appropriate wireless transceiver. The antenna 410 can be any antenna appropriate to the transceiver 420. The processor 430 and memory 440 are, respectively, data processing, and storage devices. The memory 440 may be RAM, EEPROM, or other storage medium where the processor 430 can read and write data 450.

The energy storage device management system 260 can include an antenna 310, a transceiver 320, a processor 330, and a memory 340. The transceiver 320 is capable of transmitting and/or receiving data to and from the power management system 230 (e.g., including one-way and/or two-way communication). The transceiver 320 may, for instance, be a near field communication (NFC), Bluetooth, infrared, ZigBee, ZWave, laser, infrared, or Wi-Fi transceiver, or another appropriate wireless transceiver. The antenna 310 can be any antenna appropriate to the transceiver 320. The processor 330 and memory 340 are, respectively, data processing, and storage devices. The memory 340 may be RAM, EEPROM, or other storage medium where the processor 330 can read and write data 450.

The energy storage device management system 260 may transmit data 450 to the power management system 230 in an open or closed feedback loop. The data 450 may be transmitted periodically, intermittently, or in real time. The power management system 230 may adjust the transmission of electrical power from the electrical power transmitter 240 to the electrical power receiver 250 in response to the data 450. The data 450 may include performance and operation status of the elevator car 103 and the energy storage device 270 including but not limited to the state of charge of the energy storage device 270, a state of health of the energy storage device 270, a temperature of the energy storage device 270, dispatching of the elevator car 103, a location of the elevator car 103, and a location of the electrical power receiver 250 relative to the electrical power transmitter 240. The power management system 230 may adjust the power and voltage of electricity being induced through the coils of the electrical power transmitter 240 in response to the data 450. In one example, the power management system 230 may only induce an electrical current through the coils of the electrical power transmitter 240 when the electrical power receiver 250 is within a transmission range of the electrical power transmitter 240. In another example, the power management system 230 may increase the electrical current through the coils of the electrical power transmitter 240 when the energy storage device 270 is low on electrical power or otherwise scheduled for recharging.

Turning now to FIG. 4, a system 500 includes multiple instances of the elevator system 101 of FIGS. 1 and 2, such as elevator system 101A, 101B, 101C, 101D as another example embodiment. Each of the elevator systems 101A-101D can include the elevator car 103, controller 115, power management system 230, energy storage device management system 260, energy storage device 270, and one or more electrical loads 275. In the example of FIG. 4, the energy storage device 270 is mounted below the elevator car 103. To balance electrical power demand and charging time requirements, the charging schedule used by each power management system 230 can be adjusted to change a charging duty cycle of the energy storage device 270 with respect to one or more other energy storage devices 270. For instance, dispatching system 280 can observe and track energy storage device 270 conditions to schedule charging times for each of the elevator systems 101A-101D. As one of the energy storage devices 270 has a charge level that drops below a minimum threshold, e.g., 50% charge, the dispatching system 280 can adjust the dispatch schedule to provide an extended charging period. For example, if the energy storage device 270 of elevator system 101A drops below a recharge threshold, the elevator system 101A may be taken offline or provided with a limited range of dispatch assignments (e.g., within several floors from a nearest recharging interface) while remaining elevator systems 101B-101D share a greater dispatch load.

By staggering the charging intervals of the elevator systems 101A-101D, transportation capacity can be maintained and charging power demands can be substantially normalized for the system 500. Further, if the energy storage devices 270 need to be charged for more than one of the elevator systems 101A-101D and scheduling demand is low, parallel charging may be performed using a lower charging duty cycle over an extended period of time (e.g., overnight). During a period of greater activity, the charging schedule can be adjusted to increase a charging rate. In embodiments, the charging schedule and the dispatch schedule can be adjusted with respect to one or more expected usage patterns of the elevator cars 103 of elevator systems 101A-101D. Expected usage patterns can be established by observing and tracking usage history or populated/augmented by an administrator.

Further, as depicted in the example of FIG. 4, the dispatching system 280 may be connected through a network 502 that can be in close proximity or remote from the elevator systems 101A-101D. As one example, the network 502 can be a cloud computing environment, where the dispatching system 280 is remotely located or distributed between multiple computer systems. Although the dispatching system 280 is depicted separately from the power management systems 230, the systems 230, 280 can be combined or further subdivided.

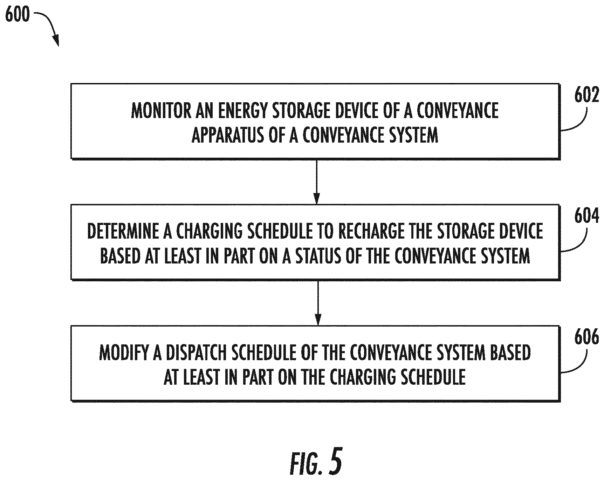

Referring now to FIG. 5, while referencing FIGS. 1-4, FIG. 5 shows a flow chart of a method 600 in accordance with an embodiment of the invention. The method 600 can be implemented on a variety of systems, such as system 200 of FIG. 2, system 500 of FIG. 4, and/or other system variations (not depicted). Further, the steps of method 600 can be further subdivided, combined, or re-ordered in embodiments.

At block 602, an energy storage device 270 of a conveyance system 101 can be monitored by a power management system 230. The power management system 230 can be configured to wirelessly transmit electrical power to the energy storage device 270 at one or more locations A1, A2. At block 604, the power management system 230 can determine a charging schedule to recharge the energy storage device 270 based at least in part on a status of the conveyance system 101.

At block 606, a dispatch schedule of the conveyance system 101 can be modified based at least in part on the charging schedule. The modification can be performed by the dispatching system 280. Modifying the dispatch schedule can adjust one or more of: a charging time of the energy storage device 270, an arrival time of the conveyance apparatus 103, and a departure time of the conveyance apparatus 103. Modifying the dispatch schedule may be based on at least one of: a state of charge of the energy storage device 270, a state of health of the energy storage device 270, a temperature of the energy storage device 270, a current dispatching plan of the conveyance apparatus 103, a location of the conveyance apparatus 103, and a location of a recharging interface.

Embodiments can adjust the charging schedule to change a charging duty cycle of the energy storage device 270 with respect to one or more other energy storage devices 270. The charging schedule and the dispatch schedule can be adjusted with respect to one or more expected usage patterns of a plurality of conveyance apparatuses 103 including the one or more other energy storage devices 270.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present invention is not thus limited. Additionally, while various embodiments of the present invention have been described, it is to be understood that aspects of the present invention may include only some of the described embodiments. Accordingly, the present invention is not to be seen as limited by the foregoing description, but is only limited by the scope of the appended claims.

## Claims

1. A system (200) comprising:
an energy storage device (270) configured to provide electrical power to a conveyance apparatus (103) of a conveyance system (101, 101A; 101B; 101C; 101D), wherein the conveyance system (101, 101A; 101B; 101C; 101D) is an elevator system, and the conveyance apparatus (103) is an elevator car;
a power management system (230) configured to determine (604) a charging schedule to recharge the energy storage device (270) based at least in part on a status of the conveyance system (101, 101A; 101B; 101C; 101D); the system (200) being **characterized in that** it further comprises:
a dispatching system (280) configured to modify (606) a dispatch schedule of the conveyance system (101, 101A; 101B; 101C; 101D) based at least in part on the charging schedule.

2. The system (200) of claim 1, wherein modification of the dispatch schedule adjusts one or more of: a charging time of the energy storage device (270), an arrival time of the conveyance apparatus (103), and a departure time of the conveyance apparatus (103).

3. The system (200) of claim 1 or 2, wherein modification of the dispatch schedule is based on at least one of a state of charge of the energy storage device (270), a state of health of the energy storage device (270), a temperature of the energy storage device (270), a current dispatching plan of the conveyance apparatus (103), a location of the conveyance apparatus (103), and a location of a recharging interface (240).

4. The system (200) of claim 1, 2 or 3, wherein the charging schedule is adjusted to change a charging duty cycle of the energy storage device (270) with respect to one or more other energy storage devices (270).

5. The system (200) of claim 4, wherein the charging schedule and the dispatch schedule are adjusted with respect to one or more expected usage patterns of a plurality of conveyance apparatuses (103) comprising the one or more other energy storage devices (270).

6. The system (200) of any preceding claim, wherein the power management system (230) is configured to wirelessly transmit electrical power to the energy storage device (270) at one or more locations.

7. The system (200) of any preceding claim, wherein the energy storage device (270) is a battery system.

8. The system (200) of any preceding claim, wherein the energy storage device (270) comprises one or more of: fuel cells, flow batteries, capacitors, and/or potential energy storage devices.

9. The system (200) of any preceding claim, wherein the electrical power is provided to one or more of lights, heating, air conditioning, displays, panels, door motors, communication systems, sensor systems, and/or safety systems of the conveyance apparatus (103).

10. A method (600) comprising:
monitoring (602), by a power management system (230), an energy storage device (270) of a conveyance apparatus (103) of a conveyance system (101, 101A; 101B; 101C; 101D), wherein the conveyance system (101, 101A; 101B; 101C; 101D) is an elevator system, and the conveyance apparatus (103) is an elevator car;
determining (604), by the power management system (230), a charging schedule to recharge the energy storage device (270) based at least in part on a status of the conveyance system (101, 101A; 101B; 101C; 101D); **characterized in that** the method further comprises the step of
modifying (606) a dispatch schedule of the conveyance system (101, 101A; 101B; 101C; 101D) based at least in part on the charging schedule.

11. The method (600) of claim 10, wherein modifying the dispatch schedule adjusts one or more of: a charging time of the energy storage device (270), an arrival time of the conveyance apparatus (103), and a departure time of the conveyance apparatus (103).

12. The method (600) of claim 10 or 11, wherein modifying the dispatch schedule is based on at least one of: a state of charge of the energy storage device (270), a state of health of the energy storage device (270), a temperature of the energy storage device (270), a current dispatching plan of the conveyance apparatus (103), a location of the conveyance apparatus (103), and a location of a recharging interface (240).

13. The method (600) of claim 10, 11 or 12, further comprising:
adjusting the charging schedule to change a charging duty cycle of the energy storage device (270) with respect to one or more other energy storage devices (270); and
optionally wherein the charging schedule and the dispatch schedule are adjusted with respect to one or more expected usage patterns of a plurality of conveyance apparatuses (101, 101A; 101B; 101C; 101D) comprising the one or more other energy storage devices (270).

14. The method (600) of any of claims 10-13, wherein the power management system (230) is configured to wirelessly transmit electrical power to the energy storage device (270) at one or more locations; and/or
wherein the energy storage device (270) is a battery system; and/or
wherein the energy storage device (270) comprises one or more of: fuel cells, flow batteries, capacitors, and/or potential energy storage devices; and/or
wherein the electrical power is provided to one or more of lights, heating, air conditioning, displays, panels, door motors, communication systems, sensor systems, and/or safety systems of the conveyance apparatus (103).

## Patentansprüche

1. System (200), umfassend:
eine Energiespeichervorrichtung (270), die so konfiguriert ist, dass sie einem Fördergerät (103) eines Fördersystems (101, 101A; 101B; 101C; 101D) elektrische Leistung bereitstellt, wobei das Fördersystem (101, 101A; 101B; 101C; 101D) ein Aufzugsystem ist und das Fördergerät (103) eine Aufzugkabine ist;
ein Leistungsverwaltungssystem (230), das so konfiguriert ist, dass es einen Ladeplan bestimmt (604), um die Energiespeichervorrichtung (270) mindestens teilweise basierend auf einem Status des Fördersystems (101, 101A; 101B; 101C; 101D) aufzuladen; wobei das System (200) **dadurch gekennzeichnet ist,**
**dass** es ferner umfasst:
ein Abfertigungssystem (280), das so konfiguriert ist, dass es einen Abfertigungsplan des Fördersystems (101, 101A; 101B; 101C; 101D) mindestens teilweise basierend auf dem Ladeplan modifiziert (606).

2. System (200) nach Anspruch 1, wobei die Modifikation des Abfertigungsplans eines oder mehrere von Folgendem einstellt: eine Ladezeit der Energiespeichervorrichtung (270), eine Ankunftszeit des Fördergeräts (103) und eine Abfahrtszeit des Fördergeräts (103).

3. System (200) nach Anspruch 1 oder 2, wobei die Modifikation des Abfertigungsplans auf mindestens einem von Folgendem basiert: einem Ladezustand der Energiespeichervorrichtung (270), einem Funktionszustand der Energiespeichervorrichtung (270), einer Temperatur der Energiespeichervorrichtung (270), einem aktuellen Abfertigungsplan des Fördergeräts (103), einem Standort des Fördergeräts (103) und einem Standort einer Aufladeschnittstelle (240).

4. System (200) nach Anspruch 1, 2 oder 3, wobei der Ladeplan eingestellt wird, um einen Ladezyklus der Energiespeichervorrichtung (270) in Bezug auf eine oder mehrere andere Energiespeichervorrichtungen (270) zu ändern.

5. System (200) nach Anspruch 4, wobei der Ladeplan und der Abfertigungsplan in Bezug auf ein oder mehrere erwartete Verwendungsmuster einer Vielzahl von Fördergeräten (103) eingestellt werden, die die eine oder mehreren anderen Energiespeichervorrichtungen (270) umfasst.

6. System (200) nach einem der vorhergehenden Ansprüche, wobei das Leistungsverwaltungssystem (230) so konfiguriert ist, dass es drahtlos elektrische Energie an die Energiespeichervorrichtung (270) an einem oder mehreren Standorten überträgt.

7. System (200) nach einem der vorhergehenden Ansprüche, wobei die Energiespeichervorrichtung (270) ein Batteriesystem ist.

8. System (200) nach einem der vorhergehenden Ansprüche, wobei die Energiespeichervorrichtung (270) eines oder mehrere von Folgenden umfasst: Brennstoffzellen, Flussbatterien, Kondensatoren und/oder potenzielle Energiespeichervorrichtungen.

9. System (200) nach einem der vorhergehenden Ansprüche, wobei die elektrische Leistung für eines oder mehrere von Beleuchtung, Heizung, Klimatisierung, Bildschirmen, Tafeln, Türmotoren, Kommunikationssystemen, Sensorsystemen und/oder Sicherheitssystemen des Fördergeräts (103) bereitgestellt wird.

10. Verfahren (600), umfassend:
Überwachen (602) einer Energiespeichervorrichtung (270) eines Fördergeräts (103) eines Fördersystems (101, 101A; 101B; 101C; 101D) durch ein Leistungsverwaltungssystem (230), wobei das Fördersystem (101, 101A; 101B; 101C; 101D) ein Aufzugsystem ist und das Fördergerät (103) eine Aufzugkabine ist;
Bestimmen (604), durch das Leistungsverwaltungssystem (230), eines Ladeplans zum Aufladen der Energiespeichervorrichtung (270) basierend zumindest teilweise auf einem Status des Fördersystems (101, 101A; 101B; 101C; 101D); **dadurch gekennzeichnet, dass** das Verfahren ferner den folgenden Schritt umfasst:
Modifizieren (606) eines Abfertigungsplans des Fördersystems (101, 101A; 101B; 101C; 101D) mindestens teilweise basierend auf dem Ladeplan.

11. Verfahren (600) nach Anspruch 10, wobei das Modifizieren des Abfertigungsplans eines oder mehrere von Folgendem einstellt: eine Ladezeit der Energiespeichervorrichtung (270), eine Ankunftszeit des Fördergeräts (103) und eine Abfahrtszeit des Fördergeräts (103).

12. Verfahren (600) nach Anspruch 10 oder 11, wobei das Modifizieren des Abfertigungsplans auf mindestens einem von Folgendem basiert: einem Ladezustand der Energiespeichervorrichtung (270), einem Funktionszustand der Energiespeichervorrichtung (270), einer Temperatur der Energiespeichervorrichtung (270), einem aktuellen Abfertigungsplan des Fördergeräts (103), einem Standort des Fördergeräts (103) und einem Standort einer Aufladeschnittstelle (240) .

13. Verfahren (600) nach Anspruch 10, 11 oder 12, ferner umfassend:
Einstellen des Ladeplans, um einen Ladezyklus der Energiespeichervorrichtung (270) in Bezug auf eine oder mehrere andere Energiespeichervorrichtungen (270) zu ändern; und
optional wobei der Ladeplan und der Abfertigungsplan in Bezug auf ein oder mehrere erwartete Verwendungsmuster einer Vielzahl von Fördergeräten (101, 101A; 101B; 101C; 101D) eingestellt werden, die die eine oder mehreren anderen Energiespeichervorrichtungen (270) umfasst.

14. Verfahren (600) nach einem der Ansprüche 10-13, wobei das Leistungsverwaltungssystem (230) so konfiguriert ist, dass es drahtlos elektrische Leistung an die Energiespeichervorrichtung (270) an einem oder mehreren Standorten überträgt; und/oder wobei die Energiespeichervorrichtung (270) ein Batteriesystem ist; und/oder
wobei die Energiespeichervorrichtung (270) eines oder mehrere von Folgenden umfasst: Brennstoffzellen, Flussbatterien, Kondensatoren und/oder potenzielle Energiespeichervorrichtungen; und/oder
wobei die elektrische Leistung für eines oder mehrere von Beleuchtung, Heizung, Klimatisierung, Bildschirmen, Tafeln, Türmotoren, Kommunikationssystemen, Sensorsystemen und/oder Sicherheitssystemen des Fördergeräts (103) bereitgestellt wird.

## Revendications

1. Système (200) comprenant :
un dispositif de stockage d'énergie (270) configuré pour fournir de l'énergie électrique à un appareil de transport (103) d'un système de transport (101, 101A ; 101B ; 101C ; 101D), dans lequel le système de transport (101, 101A ; 101B ; 101C ; 101D) est un système d'ascenseur, et l'appareil de transport (103) est une cabine d'ascenseur ;
un système de gestion d'énergie (230) configuré pour déterminer (604) un programme de charge pour recharger le dispositif de stockage d'énergie (270) sur la base au moins en partie d'un état du système de transport (101, 101A ; 101B ; 101C ; 101D) ;
le système (200) étant **caractérisé en ce qu'**il comprend en outre :
un système de répartition (280) est configuré pour modifier (606) un programme de répartition du système de transport (101, 101A ; 101B ; 101C ; 101D) sur la base au moins en partie du programme de charge.

2. Système (200) selon la revendication 1, dans lequel la modification du programme de répartition ajuste un ou plusieurs des éléments suivants : un temps de charge du dispositif de stockage d'énergie (270), un temps d'arrivée de l'appareil de transport (103), et un temps de départ de l'appareil de transport (103) .

3. Système (200) selon la revendication 1 ou 2, dans lequel la modification du programme de répartition est basée sur au moins l'un des éléments suivants : un état de charge du dispositif de stockage d'énergie (270), un état de santé du dispositif de stockage d'énergie (270), une température du dispositif de stockage d'énergie (270), un plan de répartition actuel de l'appareil de transport (103), un emplacement de l'appareil de transport (103) et un emplacement d'une interface de recharge (240) .

4. Système (200) selon la revendication 1, 2 ou 3, dans lequel le programme de charge est ajusté pour modifier un cycle de service de charge du dispositif de stockage d'énergie (270) par rapport à un ou plusieurs autres dispositifs de stockage d'énergie (270).

5. Système (200) selon la revendication 4, dans lequel le programme de charge et le programme de répartition sont ajustés par rapport à un ou plusieurs modèles d'utilisation prévus d'une pluralité d'appareils de transport (103) comprenant les un ou plusieurs autres dispositifs de stockage d'énergie (270).

6. Système (200) selon une quelconque revendication précédente, dans lequel le système de gestion d'énergie (230) est configuré pour transmettre sans fil de l'énergie électrique au dispositif de stockage d'énergie (270) à un ou plusieurs emplacements.

7. Système (200) selon une quelconque revendication précédente, dans lequel le dispositif de stockage d'énergie (270) est un système de batterie.

8. Système (200) selon une quelconque revendication précédente, dans lequel le dispositif de stockage d'énergie (270) comprend un ou plusieurs des éléments suivants : des piles à combustible, des batteries à écoulement, des condensateurs et/ou des dispositifs de stockage d'énergie potentielle.

9. Système (200) selon une quelconque revendication précédente, dans lequel l'énergie électrique est fournie à un ou plusieurs des éléments suivants : éclairage, chauffage, climatisation, affichages, panneaux, moteurs de porte, systèmes de communication, systèmes de capteurs et/ou systèmes de sécurité de l'appareil de transport (103).

10. Procédé (600) comprenant :
la surveillance (602), par un système de gestion d'énergie (230), d'un dispositif de stockage d'énergie (270) d'un appareil de transport (103) d'un système de transport (101, 101A ; 101B ; 101C ; 101D), dans lequel le système de transport (101, 101A ; 101B ; 101C ; 101D) est un système d'ascenseur, et l'appareil de transport (103) est une cabine d'ascenseur ;
la détermination (604), par le système de gestion d'énergie (230), d'un programme de charge pour recharger le dispositif de stockage d'énergie (270) sur la base au moins en partie d'un état du système de transport (101, 101A ; 101B ; 101C ; 101D) ; **caractérisé en ce que** le procédé comprend en outre l'étape de modification (606) d'un programme de répartition du système de transport (101, 101A ; 101B ; 101C ; 101D) sur la base au moins en partie du programme de charge.

11. Procédé (600) selon la revendication 10, dans lequel la modification du programme de répartition ajuste un ou plusieurs des éléments suivants : un temps de charge du dispositif de stockage d'énergie (270), un temps d'arrivée de l'appareil de transport (103), et un temps de départ de l'appareil de transport (103) .

12. Procédé (600) selon la revendication 10 ou 11, dans lequel la modification du programme de répartition est basée sur au moins l'un des éléments suivants : un état de charge du dispositif de stockage d'énergie (270), un état de santé du dispositif de stockage d'énergie (270), une température du dispositif de stockage d'énergie (270), un plan de répartition actuel de l'appareil de transport (103), un emplacement de l'appareil de transport (103) et un emplacement d'une interface de recharge (240).

13. Procédé (600) selon la revendication 10, 11 ou 12, comprenant en outre :
l'ajustement du programme de charge pour modifier un cycle de service de charge du dispositif de stockage d'énergie (270) par rapport à un ou plusieurs autres dispositifs de stockage d'énergie (270) ; et
éventuellement dans lequel le programme de charge et le programme de répartition sont ajustés par rapport à un ou plusieurs modèles d'utilisation prévus d'une pluralité d'appareils de transport (101, 101A ; 101B ; 101C ; 101D) comprenant les un ou plusieurs autres dispositifs de stockage d'énergie (270).

14. Procédé (600) selon l'une quelconque des revendications 10 à 13, dans lequel le système de gestion d'énergie (230) est configuré pour transmettre sans fil de l'énergie électrique au dispositif de stockage d'énergie (270) à un ou plusieurs emplacements ; et/ou
dans lequel le dispositif de stockage d'énergie (270) est un système de batterie ; et/ou
dans lequel le dispositif de stockage d'énergie (270) comprend un ou plusieurs des éléments suivants : des piles à combustible, des batteries d'écoulement, des condensateurs et/ou des dispositifs de stockage d'énergie potentielle ; et/ou
dans lequel l'énergie électrique est fournie à un ou plusieurs des éléments suivants : éclairage, chauffage, climatisation, affichages, panneaux, moteurs de porte, systèmes de communication, systèmes de capteurs et/ou systèmes de sécurité de l'appareil de transport (103).
